# FASCICULE DE BREVET EUROPEEN

(11) **EP 1 775 486 B1**
(45) Date de publication et mention de la délivrance du brevet: **14.05.2008**
(21) Numéro de dépôt: 06291511.1
(22) Date de dépôt: 26.09.2006
(51) Int. Cl.: F16C 23/08, F16C 19/18, F16C 27/06, F16C 33/60

(54) **Roulement à contact oblique, module et colonne de direction correspondants**
Schrägwälzlager und entsprechende Einheit und Lenksäule
Oblique contact rolling bearing and corresponding unit and steering column

(30) Priorité: 13.10.2005 FR 0510461
(43) Date de publication de la demande: 18.04.2007
(73) Titulaire: TIMKEN FRANCE, 18100 Vierzon (FR)
(72) Inventeur: Douelle, Julien, 18000 Bourges (FR); Bouet, Jérôme, 18100 Vierzon (FR)
(74) Mandataire: Domenego, Bertrand

(56) Documents cités:
- DE-A1- 4 023 183
- FR-A- 2 870 302
- US-A- 3 756 675
- US-A- 5 823 687
- US-A1- 2004 062 462

## Description

La présente invention concerne un module selon le préambule de la revendication 1.

Un tel module est connu de US-5,823,687 A.

Les colonnes de direction des véhicules de tourisme utilisent, dans la majorité des cas, deux roulements rigides à billes pour assurer le guidage en rotation de l'arbre de direction. Ces roulements doivent disposer d'un couple de rotation très faible et d'une rigidité élevée pour un ressenti au volant satisfaisant.

Ces colonnes de direction intégrant de plus en plus de fonctions telles que le réglage et la sécurité, il est souvent difficile de garantir une coaxialité exacte entre les roulements supérieur et inférieur dans le corps de colonne, en raison du procédé de réalisation, et de conception en deux parties des logements ainsi qu'une rectitude parfaite de l'arbre notamment dans le cas d'une déformation liée à la conception particulière des arbres en deux parties.

Pour s'intégrer à cet environnement, le roulement doit donc répondre à un ensemble de critères, que ne permettent pas les solutions actuelles:
- un faible couple de rotation (environ 0,02 Nm maximum),
- une faible variation de couple dans la direction circonférentielle,
- aucun jeu radial et axial,
- une capacité d'auto-alignement pour reprendre le défaut de mésalignement statique entre le logement inférieur et supérieur,
- une absorption du mésalignement dynamique provoqué par un arbre cintré sans dégrader le couple de rotation.

La présente invention a pour but de pallier l'une ou plusieurs de ces inconvénients et de proposer un roulement à contact oblique qui a une capacité d'auto-alignement pour compenser un mésalignement de deux logements inférieur et supérieur.

Conformément à l'invention, ce problème est résolu grâce au module de la revendication 1.

Selon d'autres modes de réalisation, le module comprend les caractéristiques des revendications dépendantes.

L'invention sera mieux comprise à la lecture de la description qui va suivre, donnée uniquement à titre d'exemple et faite en se référant aux dessins annexés, sur lesquels :
- la figure 1 est une vue en perspective et en coupe axiale d'un module de roulement selon un premier mode de réalisation de l'invention; et
- les figures 2 et 3 sont des vues identiques à la vue de la figure 1, de deuxième et troisième modes de réalisation d'un module de roulement selon l'invention.

Une colonne de direction selon l'invention, non représentée, comporte un manchon qui est fixé à une structure d'un véhicule automobile, un arbre de direction auquel est fixé le volant ainsi qu'un ou plusieurs modules de roulement par le(s)quel(s) l'arbre est logé dans le manchon.

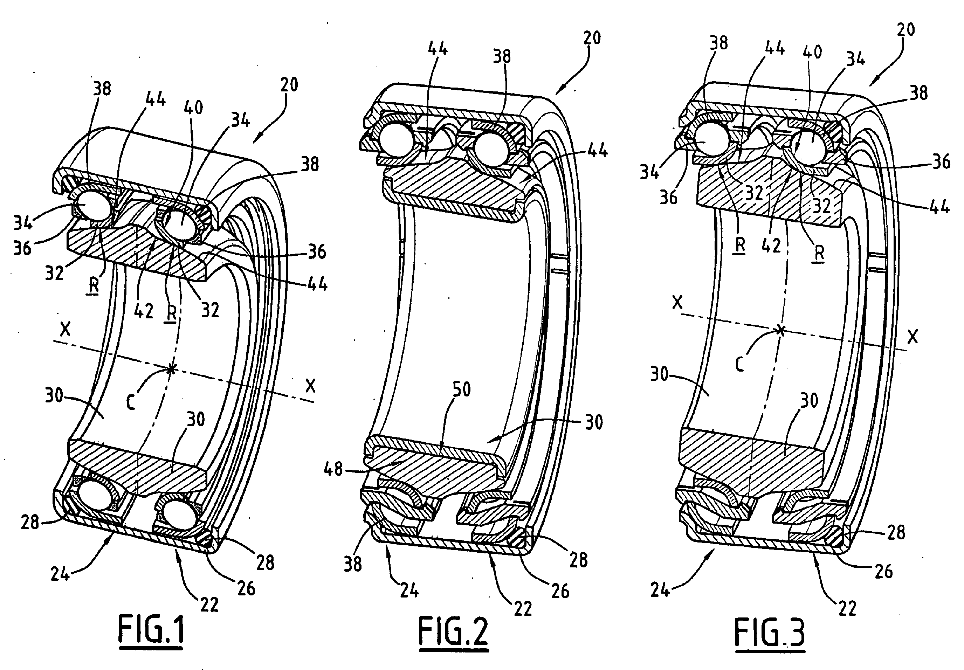

Un tel module de roulement est représenté à la figure 1, et porte la référence générale 20.

Le module de roulement 20 comporte deux roulements à contact oblique 22, 24 ainsi qu'une enveloppe extérieure 26 commune dans laquelle sont disposés les deux roulements 22, 24. Le module 20 comporte en outre deux ressorts 28.

Chaque roulement 22, 24 comprend une bague intérieure d'adaptation 30, une piste de roulement intérieure 32, une pluralité de corps de roulement, en l'occurrence des billes 34, une cage de maintien des billes 36, et une piste de roulement extérieure 38.

La piste intérieure 32 s'étend suivant un axe central X-X. Elle comporte une surface de roulement extérieure 40 sur laquelle roulent les billes 34 ainsi qu'une surface intérieure 42 en forme de tore partiel.

La bague d'adaptation 30 comporte une surface radialement extérieure 44 qui s'applique contre la surface intérieure 42 et qui est une surface de sphère partielle ayant un rayon R et dont le centre C est situé sur l'axe X-X.

Les pistes intérieure 32 et extérieure 38 sont fabriquées de préférence en métal par exemple en tôle emboutie, tandis que la bague d'adaptation 30 est fabriquée en matière plastique, notamment en polyamide 6-6. Ainsi, la piste intérieure 32 est en un matériau dont la dureté est plus importante que celle du matériau de la bague d'adaptation 30.

En l'occurrence, les bagues d'adaptation 30 des deux roulements 24, 22 sont fabriquées d'un seul tenant et sont solidaires l'une de l'autre. Par ailleurs, les deux surfaces de sphère partielle 44 ont un même centre C. En outre, les deux roulements 22, 24 sont montés en "X".

Les deux ressorts 28 sont des joints toriques en matière élastique et s'appliquent sur la piste extérieure 38. Ainsi, ils sont adaptés pour solliciter les deux roulements 22, 24 axialement vers la bague d'adaptation 30.

Sur la figure 2 est représenté un deuxième mode de réalisation d'un module de roulement selon l'invention, qui diffère du module de la figure 1 par ce qui suit. Les éléments analogues portent les mêmes références.

La bague d'adaptation 30 comporte une première portion monobloc en matière plastique 48 portant les deux surfaces 44 ainsi qu'une bague de compensation intérieure 50 en métal qui est adaptée pour recevoir l'arbre de direction.

Sur la figure 3 est représenté un troisième mode de réalisation du module selon l'invention, qui diffère de celui de la figure 1 par ce qui suit.

Le module 20 ne comporte qu'un seul ressort 28 qui est disposé entre la piste extérieure 38 du roulement 22, tandis que la piste extérieure 38 du roulement 24 s'applique directement contre l'enveloppe 26. Les deux roulements 22, 24 sont ainsi préchargés par un seul ressort.

Selon une variante non représentée, un montage en "O" des deux roulements 22, 24 d'un seul module 20 est envisageable.

La fonction de roulement principal est assurée par la présence des deux roulements à contact oblique 22, 24, alors que le rotulage de la bague 30 autour d'un axe perpendiculaire à l'axe X-X est rendu possible par le degré de liberté existant entre la bague d'adaptation 30 sphérique et les deux pistes intérieures 33 des roulements à contact oblique.

Sous mésalignement dynamique (arbre cintré), il se crée, à la mise en place de l'arbre, un déplacement angulaire permanent entre l'axe de la bague d'adaptation 30 et l'axe des pistes de roulement 32 et donc du roulement.

Sous mésalignement statique, c'est-à-dire non coaxialité des logements et pendant la rotation de l'arbre, le module selon l'invention permet un glissement des pistes intérieures de roulement sur la bague d'adaptation 30.

L'absence de jeu radial et axial est assuré par l'insertion d'un élément élastique tel que des ressorts 28 sous forme de tore caoutchouc par exemple qui précontraint les roulements lors de la fermeture de l'enveloppe extérieure.

## Revendications

1. Module de roulement, du type comprenant deux roulements (22, 24) et une enveloppe (26) dans laquelle sont disposés les deux roulements (22, 24), chacun des roulements comprenant :
- une pluralité de corps de roulement (34),
- une première piste (32), ayant un axe central (X-X), sur laquelle peuvent rouler les corps de roulement (34),
- une bague d'adaptation (30) ayant une surface d'application (44) contre la première piste (32),
la surface d'application (44) étant une surface de sphère partielle, **caractérisé en ce que** les deux roulements sont des roulements à contact oblique (22, 24), **en ce que** l'enveloppe (26) s'applique contre une piste de l'un des roulements, et **en ce qu'**un ressort (28) est disposé entre une piste de l'autre des roulements et l'enveloppe (26), et est adapté pour solliciter les deux roulements à contact oblique (22, 24) vers la bague d'adaptation (30).

2. Module selon la revendication 1, **caractérisé en ce que** la première piste est une piste intérieure (32), **en ce que** la bague d'adaptation est une bague intérieure (30), et **en ce que** la surface d'application est une surface de sphère partielle extérieure (44).

3. Module selon la revendication 1 ou 2, **caractérisé en ce que** la première piste (32) est en un matériau ayant une dureté plus importante que celle du matériau de la bague d'adaptation (30).

4. Module selon l'une quelconque des revendications 1 à 3, **caractérisé en ce que** la première piste (32) comporte une surface (42), notamment une surface intérieure, en forme de tore partiel contre laquelle s'applique la surface d'application (44).

5. Module selon l'une quelconque des revendications précédentes, **caractérisé en ce que** les bagues d'adaptation (30) des deux roulements (22, 24) sont solidaires l'une de l'autre, et **en ce que** les deux surfaces d'application de sphère partielle (44) ont un même centre (C).

6. Module selon l'une quelconque des revendications précédentes, **caractérisé en ce que** les deux roulements à contact oblique (22, 24) sont montés en "X".

7. Colonne de direction, du type comportant un manchon, un arbre de direction, et un module qui loge l'arbre de direction dans le manchon, **caractérisée en ce que** le module est un module selon l'une quelconque des revendications 1 à 6.

## Claims

1. Rolling bearing module, of the type comprising two rolling bearings (22, 24) and a casing (26) in which the two rolling bearings (22, 24) are disposed, each of the rolling bearings comprising:
- a plurality of rolling bodies (34),
- a first track (32), having a central axis (X-X), on which the rolling bodies (34) can roll,
- an adapter ring (30) having a surface (44) for application against the first track (32),
the application surface (44) being a part-spherical surface, **characterised in that** the two rolling bearings are angular contact rolling bearings (22, 24), **in that** the casing (26) bears against a track of one of the rolling bearings, and **in that** a spring (28) is disposed between a track of the other rolling bearing and the casing (26) and is arranged to urge the two angular contact rolling bearings (22, 24) towards the adapter ring (30).

2. Module according to claim 1, **characterised in that** the first track is an inner track (32), **in that** the adapter ring is an inner ring (30), and **in that** the application surface is an outer part-spherical surface (44).

3. Module according to claim 1 or 2, **characterised in that** the first track (32) is made of a material whose hardness is greater than that of the material of the adapter ring (30).

4. Module according to any one of claims 1 to 3, **characterised in that** the first track (32) comprises a surface (42), especially an inner surface, in the form of a partial torus against which the application surface (44) bears.

5. Module according to any one of the preceding claims, **characterised in that** the adapter rings (30) of the two rolling bearings (22, 24) are integral with one another, and **in that** the two part-spherical application surfaces (44) have the same centre (C).

6. Module according to any one of the preceding claims, **characterised in that** the two angular contact rolling bearings (22, 24) are mounted in an "X".

7. Steering column, of the type comprising a sleeve, a steering shaft, and a module which accommodates the steering shaft in the sleeve, **characterised in that** the module is a module according to any one of claims 1 to 6.

## Patentansprüche

1. Lagermodul des Typs, der zwei Lager (22, 24) und eine Hülle (26) aufweist, in der die beiden Lager (22, 24) angeordnet sind, wobei jedes der Lager aufweist:
- eine Mehrzahl von Lagerkörpern (34),
- eine erste Bahn (32) mit einer zentralen Achse (X-X), auf welcher die Lagerkörper (34) rollen können,
- einen Einstellring (30) mit einer Anlagefläche (44) gegen die erste Bahn (32),
wobei die Anlagefläche (44) eine teilsphärische Fläche ist, **dadurch gekennzeichnet, dass** die beiden Lager Schräglager (22, 24) sind, **dadurch**, dass die Hülle (26) gegen eine Bahn von dem einem der Lager anliegt, und **dadurch**, dass eine Feder (28) zwischen einer Bahn des anderen der Lager und der Hülle (26) angeordnet ist und zum Belasten der beiden Schräglager (22, 24) in Richtung zu dem Einstellring (30) angepasst ist.

2. Modul gemäß Anspruch 1, **dadurch gekennzeichnet, dass** die erste Bahn eine innere Bahn (32) ist, **dadurch**, dass der Einstellring ein Innenring (30) ist, und **dadurch**, dass die Anlagefläche eine äußere teilsphärische Fläche (44) ist.

3. Modul gemäß Anspruch 1 oder 2, **dadurch gekennzeichnet, dass** die erste Bahn (32) aus einem Material ist, das eine Härte aufweist, die größer ist als die des Materials des Einstellrings (30).

4. Modul gemäß einem der Ansprüche 1 bis 3, **dadurch gekennzeichnet, dass** die erste Bahn (32) eine Fläche (42), insbesondere eine Innenfläche, in Teil-Torusform aufweist, gegen die die Anlagefläche (44) anliegt.

5. Modul gemäß einem der vorherigen Ansprüche, **dadurch gekennzeichnet, dass** die Einstellringe (30) der beiden Lager (22, 24) miteinander einstückig sind, sowie **dadurch**, dass die beiden teilsphärischen Anlageflächen (44) einen gleichen Mittelpunkt (C) aufweisen.

6. Modul gemäß einem der vorherigen Ansprüche, **dadurch gekennzeichnet, dass** die beiden Schräglager (22, 24) als "X" montiert sind.

7. Lenksäule des Typs, der eine Muffe, eine Lenkwelle und ein Modul aufweist, das die Lenkwelle in der Muffe lagert, **dadurch gekennzeichnet, dass** das Modul ein Modul gemäß einem der Ansprüche 1 bis 6 ist.
